Europäisches Patentamt

European Patent Office

Office européen des brevets

(11) Publication number: 0 198 528
A1

# EUROPEAN PATENT APPLICATION

(21) Application number: 86200449.6

(22) Date of filing: 19.03.86

(51) Int. Cl.⁴: **H02G 15/00** , H02G 15/10 , H01B 7/28

(30) Priority: 20.03.85 NL 8500813

(43) Date of publication of application:
22.10.86 Bulletin 86/43

(84) Designated Contracting States:
AT CH DE FR GB IT LI NL SE

(71) Applicant: **Chemische Industrie Filoform B.V.
Verlengde Hoogravenseweg 69c
NL-3525 BB Utrecht(NL)**

(72) Inventor: **Baars, Jan
Th. Elsenstraat 28
Montfoort(NL)**

(74) Representative: **Smulders, Theodorus A.H.J.
et al
Vereenigde Octrooibureaux Nieuwe Parklaan
107
NL-2587 BP 's-Gravenhage(NL)**

(54) A method of providing a water seal in a multi-wire cable or like conductor, and a foil for use in carrying out said method.

(57) A method of providing a water seal in a sheathed, multi-wire cable. The cable sheath is removed at a desired location, and the exposed cable portion is wrapped with a foil having a filling opening therein, through which a thixotropic synthetic resin composition is poured. The foil, which serves as a casing, and is made for example of PVC, is provided in known manner along its circumference with a liner of foam plastic having a cell structure that it is closed to liquid synthetic resin, and within this liner an open-celled foam plastic or the like.

FIG.1

A method of providing a water seal in a multi-wire cable or like conductor, and a foil for use in carrying out said method.

This invention relates to a method of providing a water seal in a multi-sheathed multi-wire cable or like conductor, which comprises removing the cable sheath at a desired location, subsequently wrapping over the exposed cable portion a foil having a filling opening therein, serving as a casing, and finally supplying a synthetic resin composition through said opening.

In a similar method which is known in the art, use is made of a casing in the form of a shrinkable sleeve, which is heat-shrunk onto the two cable sheath portions, whereafter a polyurethane foam is supplied through the opening. One disadvantage of the known method is that in the presence of moisture, for example, it is not ensured that a seal extending throughout the entire inner diameter of the sheath is obtained. In addition , polyurethane is sensitive to moisture, so that the ingress of moisture is not inconceivable. A further disadvantage is that the foamed material is brittle, so that after - (repeated) movement of the cable at the position of the water seal, this will become torn, and fail to function as a water seal.

It is an object of the present invention to remedy the above disadvantages.

To this effect, according to the present invention, the method is characterized by using a thixotropic synthetic resin composition. Such a synthetic resin composition must be injected at a superatmospheric pressure, which ensures that a perfectly closed water seal is formed. When the synthetic resin composition is injected, it will moreover flow laterally into the portions surrounded by the cable sheath. As a consequence the cable is reinforced at the position of the water seal, where first the cable sheath was removed and a weakening had formed.

One suitable thixotropic synthetic resin composition is an epoxy resin to which a thixotropy imparting agent, for example silicon dioxide, has been added. In essence, however, any cold-setting two-component resin can be used: examples are epoxy resin, polyurethane resin, acrylic resin and polyester resin. A suitable thixotropy imparting agent is the above amorphous silicon dioxide.

The invention further relates to a tape or foil of synthetic plastics material for use as a casing in the method described above. Such a casing may be a foil of, for example, PVC, provided, in known manner, with a liner of foam plastic along its circumference, said foam plastic having a cell structure that is closed to liquid synthetic resin, and within said liner an open-celled foam plastic or the like, which does permit the passage of liquid synthetic resin material.

In order to obtain an optimal seal at the circumferential edges, so that no liquid synthetic resin can leak away as it is injected under pressure, the foil may be provided at least at the circumferential portion provided with foam plastic impermeable to liquid synthetic resin with a recess. For keeping the longitudinal edges of the cases in position relative to each other in the mounted condition, the casing may be provided in the transverse direction with one or more recesses each adapted to receive a clamping strap.

The filling opening may be provided adjacent to a longitudinal edge of the casing. This is especially of importance when a plurality of cables are located in side-by-side relationship, because in such a case the casing can be arranged so that the filling opening and the fastening portion are at the exposed, accessible side.

In a further elaboration of the invention, use can be made of a known per se filling opening equipped with a valve.

One embodiment of the water seal according to the invention will now be described, by way of example, with reference to the accompanying drawings.

In said drawings,

Fig. 1 shows a longitudinal sectional view of a water seal according to the present invention; and

Fig. 2 shows the water lock of Fig. 1 in elevational view.

Referring to the drawings, a water seal is provided in the following manner. In a cable or conductor 1, having a sheath 2 surrounding a multiplicity of wires 3, the sheath is removed over a predetermined portion, whereby transverse sheath edges 4 and 5 are formed. At the edges 4 and 5, strips of mastic 6 or other doubleface adhesive material are applied to sheath 2. At the position where the sheath has been removed from the cable, a plastic tape or foil 7, equipped with a filling spout 8 (shown in elevational view in the drawings) is installed. Spout 8 may, in known manner, be provided with a non-return valve, not shown.

The plastic tape or foil 7 is provided at its circumferential inner edge with a strip 9 of foam plastics having a cell structure that is closed to synthetic resin. When the foil is placed in the desired position, the strips 9 each contact a strip of mastic 6, thereby forming a joint which does not permit the passage of synthetic resin but does permit the passage of air.

Provided inwardly of the above strip of foam plastics 9 is a layer of foam plastics 10 having an open structure. This layer 10 ensures that as the thixotropic synthetic resin is injected it is spread well. To ensure that no resin leaks away during injection, the foil may be provided with a recess 11 at its circumferential edge where the strip of foam plastics 9 is provided. Such recesses are also formed in the central portion in the transverse direction. They serve to accommodate plastic clamping straps 12 of known type.

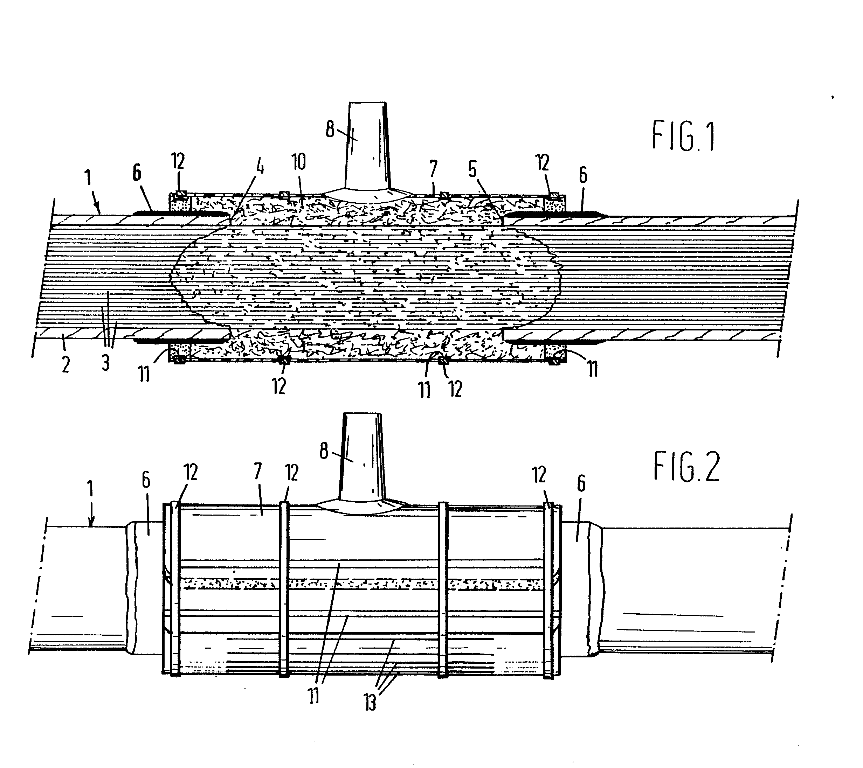

It is noted that, in Fig. 1, the wires 3 are shown in dot-dash lines in the portion injected with synthetic resin.

As further shown by Fig. 1, the synthetic resin will penetrate partially into the portion of the cable still surrounded by sheath 2. This provides a reinforcement of the cable at the portion where the sheath has been removed.

The plastic tape or foil 7 is suitable for use in cables or conductors of various thicknesses. In order to ensure, however, that when the foil is placed in position, the marginal portion incorporating the filling spout 8 is not, or hardly, in opposition to a portion of the opposite foil edge, which would interfere with the injection of synthetic resin, a portion of the edge in question can be removed to suit the circumstances. For this purpose the foil is provided with dimensional markings 13 for various cable thicknesses, so that the foil can be cut to the desired width prior to use.

It will be clear that modifications are possible without departing from the scope of the invention.

## Claims

1. A method of providing a water seal in a sheathed multi-wire cable, which comprises removing the cable sheath at a desired location, subsequently wrapping over the exposed cable portion a foil having a filling opening therein, serving as a casing, and finally supplying a synthetic resin composition through said opening, characterized by using a thixotropic synthetic resin composition.

2. A method as claimed in claim 1, characterized by using a composition comprising an epoxy resin and a thixotropy imparting agent such as silicon dioxide.

3. A tape or foil or synthetic plastics material for use as a casing in the method as claimed in claim 1 or 2, characterized in that the casing consists of a foil of, for example, PVC, provided, in known manner, with a liner of foam plastic along its circumference, said foam plastic having a cell structure that it is closed to a liquid synthetic resin, and within said liner an open-celled foam plastic or the like.

4. A foil as claimed in claim 3, characterized in that, at least at the circumferential portion provided with foam plastic impermeable to liquid synthetic resin the foil is formed with a recess.

5. A foil as claimed in claim 4, characterized in that between said recesses at the circumferential portions, it is provided with one or more further recesses each adapted to receive a clamping strap.

6. A foil as claimed in claim 3, 4 or 5, characterized in that the filling opening is provided adjacent to a longitudinal edge of the casing.

7. A foil as claimed in any of claims 3, 4, 5 and 6, characterized in that the filling opening is equipped with a valve.

FIG.1

FIG.2

0 198 528

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 216 973  (PIRELLI) <br> * Page 2, left-hand column, paragraphs 1-6; figures 4,5 * | 1,2 | H 02 G  15/00 <br> H 02 G  15/10 <br> H 01 B   7/28 |
| | --- | | |
| X | GB-A-1 012 005  (PIRELLI) <br> * Page 2, lines 1-21; figure 5 * | 1 | |
| | --- | | |
| X | EP-A-0 115 220  (3M) <br> *  Page 5, line 10 - page 6, line 20;  page 8, lines 8-13; page 13, lines 21-23; figures 1-5 * | 1 | |
| | --- | | |
| Y | DE-A-2 423 072  (BOSCH) <br> * Page 3, lines 5-8,13,14 * | 1 | |
| A | | 2 | **TECHNICAL FIELDS SEARCHED (Int. Cl.4)** |
| | --- | | |
| Y | GB-A-2 099 639  (TATSUTA) <br> * Page 1 * | 1 | H 02 G <br> H 01 B |
| | --- | | |
| A | IBM TECHNICAL DISCLOSURE BULLETIN, vol. 9, no. 11, April 1967, page 1487, New York, US; P.V. ROBOCK: "Low-viscosity, flame-retardant, epoxy potting compound" <br> * Page 1487 * | 1,2 | |
| | --- | -/- | |

The present search report has been drawn up for all claims

| Place of search <br> THE HAGUE | Date of completion of the search <br> 03-07-1986 | Examiner <br> LOMMEL A. |
|---|---|---|

| | **DOCUMENTS CONSIDERED TO BE RELEVANT** | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | FR-A-2 339 270 (PREF. LINE PRODUCTS) <br> * Pages 13-15; figures 1-6 * | 3 | | |
| A | FR-A-2 272 322 (COGEBI) <br> * Page 1, line 38 - page 2, line 23 * | 1,7 | | |
| A | US-A-4 466 843 (RAYCHEM) <br> * Column 2, line 56-65 * | 3 | | |

The present search report has been drawn up for all claims

| Place of search | Date of completion of the search | Examiner |
|---|---|---|
| THE HAGUE | 03-07-1986 | LOMMEL A. |

TECHNICAL FIELDS SEARCHED (Int. Cl.4)